(19) Europäisches Patentamt
European Patent Office
Office européen des brevets

(11) **EP 2 620 754 B1**

(12) **EUROPÄISCHE PATENTSCHRIFT**

(45) Veröffentlichungstag und Bekanntmachung des Hinweises auf die Patenterteilung:
**08.06.2022 Patentblatt 2022/23**

(21) Anmeldenummer: **12152457.3**

(22) Anmeldetag: **25.01.2012**

(51) Internationale Patentklassifikation (IPC):
**G01F 23/284** *(2006.01)* **G01F 23/296** *(2022.01)*

(52) Gemeinsame Patentklassifikation (CPC):
**G01F 23/284; G01F 23/2962**

(54) **Hüllkurvenberechnung mittels Phasendrehung**

Envelope calculation by means of phase shifting

Calcul de courbe d'enveloppe à l'aide d'une rotation de phase

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.07.2013 Patentblatt 2013/31**

(73) Patentinhaber: **VEGA Grieshaber KG**
**77709 Wolfach (DE)**

(72) Erfinder:
• **WELLE, Roland**
**77756 Hausach (DE)**
• **REICH, Werner**
**77656 Offenburg (DE)**
• **HOFERER, Christian**
**77652 Offenburg (DE)**

(74) Vertreter: **Maiwald Patent- und Rechtsanwaltsgesellschaft mbH Elisenhof Elisenstraße 3 80335 München (DE)**

(56) Entgegenhaltungen:
**EP-A1- 2 226 615 DE-A1-102006 006 572**

**Beschreibung**

Gebiet der Erfindung

Die Erfindung betrifft die Füllstandmessung und insbesondere betrifft die Erfindung ein Verfahren zur Berechnung eines Hüllkurvenwertes bei der Füllstandmessung durch einen Füllstandsensor und einen Puls-Laufzeit-Füllstandsensor zur Berechnung eines Hüllkurvenwertes bei der Füllstandmessung.

Hintergrund

Zur kontinuierlichen Füllstandbestimmung in Behältern, die beispielsweise Flüssigkeiten oder Schüttgüter enthalten, werden oftmals Sensoren verwendet, die nach dem Puls-Laufzeit-Verfahren die Laufzeit von elektromagnetischen oder akustischen Wellen vom Sensor zur Füllgutoberfläche und zurück messen. Aus dem aus der Puls-Laufzeit über die Wellenausbreitungsgeschwindigkeit ermittelten Abstand zwischen Sensor und Füllgutoberfläche ist bei bekanntem Montageort des Sensors relativ zum Behälterboden die gesuchte Füllhöhe unmittelbar zu berechnen.

DE 10 2006 006 572 A1 beschreibt eine iterative Berechnung zur Bildung einer Hüllkurve eines zeitgedehnten Empfangssignals (sog. Zwischenfrequenzsignal oder ZF-Signal) eines Puls-Laufzeit-Füllstandsensors. Das ZF-Signal wird zu diskreten Zeitpunkten abgetastet und die abgetasteten Werte werden in digitale Abtastwerte gewandelt. Danach wird aus jeweils genau zwei digitalen Abtastwerten ein Hüllkurvenwert berechnet.

Zusammenfassung der Erfindung

Es ist eine Aufgabe der Erfindung, die Einhüllende (Hüllkurve) eines Signals, und insbesondere eines Empfangssignals eines Puls-Laufzeit-Füllstandsensors, zu berechnen.

Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist ein Verfahren zur Berechnung eines Hüllkurvenwertes bei einer Füllstandmessung durch einen Füllstandsensor angegeben. Bei dem Verfahren wird das Empfangssignal des Füllstandsensors zumindest in einem Bereich zu diskreten Zeitpunkten abgetastet und die zeitdiskreten (analogen) Abtastwerte des abgetasteten Empfangssignals werden daraufhin in digitale Abtastwerte gewandelt. Daraufhin erfolgt die Berechnung eines neuen Wertes für einen ersten digitalen Abtastwert der digitalen Abtastwerte durch Drehung der Phase des Abtastwertes des abgetasteten Bereichs des Empfangssignals um einen vorgegebenen Winkel. Diese Berechnung des neuen Wertes erfolgt beispielsweise unter Verwendung mehrerer der digitalen Abtastwerte. Daraufhin wird ein Hüllkurvenwert aus dem ersten digitalen Abtastwert und dem durch die Drehung der Phase berechneten neuen Wert berechnet.

Unter Phase eines Abtastwertes sei hier die Phasenlage des Empfangssignals zum Zeitpunkt der Abtastung verstanden.

Bei den Sensoren, die zur Durchführung des oben und im Folgenden beschriebenen Verfahrens in Frage kommen, handelt es sich beispielsweise um Puls-Laufzeit-Füllstandsensoren, Füllstandradarsensoren oder Ultraschall-Füllstandsensoren zur Messung eines Füllstandes.

Gemäß einem weiteren Aspekt der Erfindung wird das Empfangssignal vor dem Abtasten in ein zeitgedehntes Zwischenfrequenzsignal gewandelt. Wenn im Folgenden also von "Empfangssignal" die Rede ist, kann es sich hierbei um ein zeitgedehntes oder ein nicht-zeitgedehntes Signal handeln. Wenn im Folgenden von einem "Zwischenfrequenzsignal" oder "ZF-Signal" die Rede ist, kann dieses auch als "Empfangssignal" bezeichnet werden.

Gemäß einem weiteren Aspekt der Erfindung wird der Hüllkurvenwert als Wurzel einer Quadratsumme aus jeweils einem abgetasteten und einem berechneten Wert gebildet. Beispielsweise kann hierfür die in der folgenden Beschreibung aufgeführte Formel verwendet werden.

Gemäß einem weiteren Aspekt der Erfindung erfolgt die Wandlung der Abtastwerte des abgetasteten Empfangssignals durch eine Unterabtastung. Die DE 10 2006 006 572 A1 macht insbesondere in den Absätzen 87 und 88 deutlich, was unter einer derartigen Unterabtastung zu verstehen sein kann. So stellt dieses Dokument fest, dass sich die Grenzen der Abtastung aus der ZF-Trägerfrequenz und der Bandbreite des ZF-Signals ergeben.

Das Dokument EP 2 226 615 A1 betrifft das Messen von Füllständen, eine Messvorrichtung und ein Verwenden der Messvorrichtung zur Kollisionsüberwachung.

Gemäß einem weiteren Aspekt der Erfindung weist der vorgegebene Winkel einen Wert ungleich 90 Grad auf.

Gemäß einem weiteren Aspekt der Erfindung weist der vorgegebene Winkel einen Wert gleich 90 Grad auf, wobei die Phasendrehung durch ein Hilbert-Filter erfolgt.

Gemäß einem weiteren Aspekt der Erfindung erfolgt die Phasendrehung durch ein digitales Filter im Zeitbereich.

Gemäß einem weiteren Aspekt der Erfindung handelt es sich bei dem Filter um eine FIR-Filterstruktur oder eine IIR-Filterstruktur.

Gemäß einem weiteren Aspekt der Erfindung erfolgt die Phasendrehung durch ein digitales Filter im Frequenzbereich.

Gemäß einem weiteren Aspekt der Erfindung nimmt das digitale Filter eine Fourier-Transformation vor.

Gemäß einem weiteren Aspekt der Erfindung wird vor der Berechnung der Hüllkurvenwerte eine kohärente Scharmittelung durchgeführt. Bei der kohärenten Scharmittelung werden nicht die Hüllkurvenwerte verschiedener Hüllkurven gemittelt, sondern die digitalisierten Werte unterschiedlicher ZF-Signale, wodurch ein verbessertes Signal-Rausch-Verhältnis entsteht.

Gemäß einem weiteren Aspekt der Erfindung wird eine Vielzahl von Hüllkurvenwerten berechnet, aus welcher dann der Gesamtverlauf der Hüllkurve bestimmt wird.

Gemäß einem weiteren Aspekt der Erfindung ist ein Füllstandsensor zum Berechnen eines Hüllkurvenwertes einer Hüllkurve und zum Bestimmen eines Füllstandes eines Mediums angegeben, bei dem es sich beispielsweise um einen Puls-Laufzeit-Füllstandsensor handelt. Der Füllstandsensor weist eine Abtastvorrichtung zum Abtasten zumindest eines Bereichs eines Empfangssignals zu diskreten Zeitpunkten und zum Wandeln der abgetasteten Werte in digitale Abtastwerte auf. Weiterhin ist eine digitale Signalverarbeitungsvorrichtung vorgesehen, welche die Berechnung eines neuen Wertes für einen ersten digitalen Abtastwert der digitalen Abtastwerte durch Drehung der Phase des diesem ersten digitalen Abtastwert entsprechenden ZF-Signals um einen vorgegebenen Winkel durchführt. Daraufhin erfolgt das Berechnen eines Hüllkurvenwertes aus dem ersten digitalen Abtastwert und dem durch die Drehung der Phase berechneten neuen Wert.

Gemäß einem weiteren Aspekt der Erfindung ist der Füllstandsensor insbesondere zur Durchführung des oben und im Folgenden beschriebenen Verfahrens ausgeführt.

Gemäß einem weiteren Aspekt der Erfindung ist eine Signalverarbeitungseinrichtung mit einer Abtastvorrichtung und einem Prozessor zum Berechnen eines Hüllkurvenwertes eines analogen Signals angegeben, welche zum Durchführen der oben und im Folgenden beschriebenen Verfahrensschritte ausgeführt ist.

Gemäß einem weiteren Aspekt der Erfindung ist ein Programmelement angegeben, welches, wenn es auf einem Prozessor, und insbesondere auf einem Prozessor eines Füllstandsensors ausgeführt wird, eine digitale Signalverarbeitungsvorrichtung anleitet, die oben und im Folgenden beschriebenen Berechnungsschritte hinsichtlich der neuen Werte und der Hüllkurvenwerte durchzuführen.

Dabei kann das Programmelement zum Beispiel Teil einer Software sein, die auf einem Prozessor eines Füllstandsensors gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, so wie auch ein Programmelement, welches durch eine Aktualisierung (update) ein bestehendes Programm zur Verwendung der Erfindung veranlasst.

Gemäß einem weiteren Aspekt der Erfindung ist ein computerlesbares Medium angegeben, auf welchem ein oben beschriebenes Programmelement gespeichert ist.

Es kann als ein Kernaspekt der Erfindung angesehen werden, dass das Empfangssignal, bzw. ein Bereich hiervon, der sich zum Beispiel über einen Meter erstreckt, ggf. nach einer Zeitdehnung (wodurch aus dem Empfangssignal ein ZF-Signal entsteht), zu diskreten Zeitpunkten abgetastet wird und die abgetasteten Werte in digitale Abtastwerte gewandelt werden. Aus den digitalen Abtastwerten werden neue Werte durch Drehung der Phase der entsprechenden ZF-Signale um jeweils einen vorgegebenen Winkel berechnet. Daraufhin können die entsprechenden Hüllkurvenwerte aus jeweils dem entsprechenden gewandelten Wert und dem durch die Drehung der Phase berechneten neuen Wert berechnet werden.

In anderen Worten wird jeder Hüllkurvenwert aus dem ihm zugehörigen gewandelten Wert und dem durch Drehen der Phase des entsprechenden Wertes des abgetasteten Bereichs des Empfangssignals berechneten neuen Wert berechnet.

Im Folgenden werden mit Verweis auf die Figuren Ausführungsbeispiele der Erfindung beschrieben.

Kurze Beschreibung der Figuren

Fig. 1 zeigt eine schematische Darstellung der Abtastung eines Empfangssignals.

Fig. 2 zeigt eine schematische Darstellung einer anderen Abtastung eines Empfangssignals.

Fig. 3 zeigt eine schematische Darstellung einer weiteren Abtastung eines Empfangssignals.

Fig. 4A zeigt den Amplitudengang eines idealen Phasendrehers.

Fig. 4B zeigt den Phasengang eines idealen Phasendrehers.

Fig. 5A zeigt den Amplitudengang eines realen Phasendrehers für ein Bandpasssignal.

Fig. 5B zeigt den Phasengang eines realen Phasendrehers für ein Bandpasssignal.

Fig. 6 zeigt ein Blockschaltbild eines Verfahrens gemäß einem Ausführungsbeispiel der Erfindung.

Fig. 7 zeigt einen Füllstandsensor gemäß einem Ausführungsbeispiel der Erfindung, der in einen Tank eingebaut ist.

Fig. 8 verdeutlicht eine Drehung der Phase des Empfangssignals gemäß einem Ausführungsbeispiel der Erfindung.

Detaillierte Beschreibung von Ausführungsbeispielen

Die Darstellungen in den Figuren sind schematisch und nicht maßstäblich. In der folgenden Figurenbeschreibung werden für die gleichen oder ähnlichen Elemente die gleichen Bezugsziffern verwendet.
Das Pulsradarverfahren bedient sich der Erzeugung kurzer kohärenter Mikrowellenpulse, sogenannter Bursts, und ermittelt die direkte Zeitdauer zwischen Aussendung und Empfang der Pulse. Die zu messenden Zeitabstände sind bei üblichen Messentfernungen im Bereich bis zu einigen Metern äußerst kurz, weshalb bei Pulsradarsensoren das empfangene Echosignal (im Folgenden auch als Empfangssignal bezeichnet) zweckmäßigerweise durch ein Zeittransformationsverfahren zeitlich gedehnt wird. Dieses Verfahren liefert ein gedehntes Echosignal, das dem empfangenen hochfrequenten Sende- und Empfangssignal entspricht, aber zeitlich beispielsweise um einen Faktor zwischen 10000 und 100000 langsamer abläuft. Aus einer Trägerschwingungsfrequenz des Mikrowellenpulses von beispielsweise 5,8 GHz wird eine Trägerschwingungsfrequenz des zeitgedehnten Echopulses zwischen beispielsweise 58 kHz und 580 kHz. Dieses intern durch die Zeittransformation entstandene Signal wird allgemein auch als Zwischenfrequenzsignal oder kurz ZF-Signal bezeichnet und liegt üblicherweise etwa zwischen 10kHz und 1MHz, beispielsweise zwischen 50kHz und 200kHz. Dieses ZF-Signal ist ein zeitgedehntes Abbild des zeitlichen Verlaufs der gesendeten und empfangenen Mikrowellenpulse. Sowohl vom Frequenzbereich als auch dem Charakter des Amplitudenverlaufs ähneln sich ZF-Signal des Pulsradarverfahrens und Echosignal des Ultraschallverfahrens sehr stark, weshalb die weitere Verarbeitung und Auswertung dieser Signale zur Ermittlung der relevanten Echolaufzeit und damit Messentfernung bis auf geringe Unterschiede gleich ist. Wenn also in dieser Beschreibung von Empfangssignalen oder ZF-Signalen die Rede ist, sollen darunter nicht nur die ggf. zeitgedehnten Repräsentationen der empfangenen Mikrowellensignale sondern auch die prinzipiell gleich aussehenden empfangenen Ultraschall-Echosignale verstanden werden. Gleiches gilt auch für andere Arten elektromagnetischer Wellen wie beispielsweise Licht.
Ein ZF-Signal (und ebenso auch das nicht zeitgedehnte Empfangssignal) enthält einen zeitlichen Ablauf von einzelnen Pulsen, angefangen von einem vom Sendepuls abgeleiteten Referenzpuls bzw. -echo über verschiedene Pulse bzw. Echos von Reflexionsstellen innerhalb des Ausbreitungswegs der Wellen, an denen sich die Wellenimpedanz des Ausbreitungsmediums ändert. Jeder Puls besteht aus einer Trägerschwingung einer bestimmten festgelegten Frequenz mit einem durch die Form des Sendepulses festgelegten pulsförmigen Amplitudenverlauf. Die Gesamtheit aller Echos über einer gewissen Zeit zwischen Auftreten des Referenzechos und der für einen interessierenden Messbereich maximal erforderlichen Laufzeit bildet das ZF-Signal. Ein Messzyklus eines betreffenden Füllstandsensors ist gekennzeichnet durch die Bildung mindestens eines Teils eines ZF-Signals, üblicherweise aber eines oder mehrerer kompletter ZF-Signale und einer anschließenden Signalverarbeitung, Auswertung, Messwertbildung und Messwertausgabe, die sich auf das gebildete ZF-Signal stützen. Eine periodische Wiederholung der Messzyklen garantiert eine Aktualisierung der Messwerte zur Verfolgung sich ändernder Füllstände.
Um aus einer gegebenenfalls auftretenden Vielfalt von Echos innerhalb eines ZF-Signals jenes Echo von der Füllgutoberfläche gegenüber den zusätzlich auftretenden Störechos zu separieren, ist die Erkennung der Einzelechos anhand von charakteristischen Merkmalen notwendig. Ein wichtiges Merkmal ist der Verlauf der Amplitude eines Echos mit Amplitudenanstieg am Beginn, Maximalamplitude und Amplitudenabfall am Echoende. Diesen Amplitudenverlauf erhält man durch Bildung der Hüllkurve des ZF-Signals.
Um die Nachteile einer weitgehend analogen Signalverarbeitung, beispielsweise Langzeitdrift, Bauteiltoleranzen und fehlende Flexibilität an sich verändernde Sensorparameter, zu vermeiden, ist eine überwiegend digitale Verarbeitung des ZF-Signals anzustreben. Dazu bietet sich an, das ZF-Signal nach einer eventuellen anlogen Signalverstärkung und Tiefpass- bzw. Bandpassfilterung zur Vermeidung von Aliasing abzutasten und die zeitdiskreten Abtastwerte in einen den Spannungswert repräsentierenden Digitalwert zu wandeln. Dieses Verfahren wird als A/D-Wandlung bezeichnet. Eine digital gespeicherte Abtastfolge repräsentiert das analoge ZF-Signal mit allen darin enthaltenen Echos. Sowohl die Amplituden- als auch die Phaseninformation des ZF-Signals ist erhalten geblieben und der digitalen Weiterverarbeitung des Signals zugänglich.

Das ZF-Signal setzt sich in der Regel aus mehreren harmonischen Schwingungen mit ähnlicher Frequenz zusammen. Im einfachsten Fall jedoch besitzt das ZF-Signal nur eine einzige Frequenz. Bei der Überführung des kontinuierlichen Signals in digitale Werte werden ausschließlich abstrakte Momentanwerte, im Allgemeinen die Spannungswerte, des ZF-Signals erfasst.

Die dazugehörigen Phasenwerte bzw. Phasen oder Phasenlagen der A/Dgewandelten Werte korrespondieren mit dem Zeitpunkt, zu welchem die Abtastung erfolgte. Ist darüber hinaus die Frequenz der harmonischen Schwingung bekannt, so kann unmittelbar zu jedem digitalen Abtastwert ein Phasenwert bzw. seine Phase relativ zu einem Bezugspunkt bestimmt werden.

So lässt sich beispielsweise zwischen zwei Abtastwerten der Phasenwinkel bzw. die Phase bestimmen, wenn der eine Wert als Bezugspunkt des anderen Wertes gewählt wird.

Bei einer zeitlichen Folge von Abtastwerten kann es sich als nützlich erweisen, einem Abtastwert die relative Phase bzw. Phasenlage zum vorherigen Abtastwert zuzuordnen. Der Phasenwert des ersten Abtastwertes (Nullphasenwinkel) ist in diesem Fall frei zu wählen (praktischerweise gleich 0).

Zur besseren Veranschaulichung kann in diesem Zusammenhang auch auf Zeigerdiagramme und komplexe Zahlen zurückgegriffen werden.

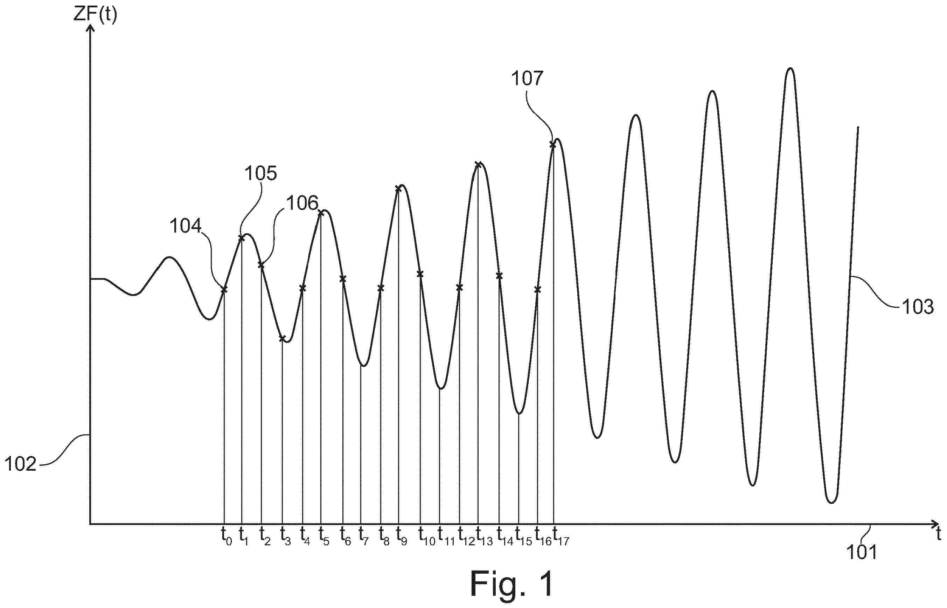

Fig. 1 zeigt eine schematische Darstellung der Abtastung eines Empfangssignals, beispielsweise eines ZF-Signals. Die horizontale Achse 101 stellt den zeitlichen Verlauf dar und die vertikale Achse 102 den Momentanwert des Empfangssignals 103.

Die Abtastung erfolgt äquidistant zu den aufeinanderfolgenden Zeitpunkten t0, t1, t2, ..., t17 und liefert die diesen Zeitpunkten entsprechenden Amplitudenwerte 104, 105, 106,..., 107. wenn zwei Abtastwerte durch Analog/Digital-Wandlung (A/D-Wandlung) gewonnen wurden und der Abtastzeitpunkt sowie die Kreisfrequenz der Trägerschwingung bekannt sind.

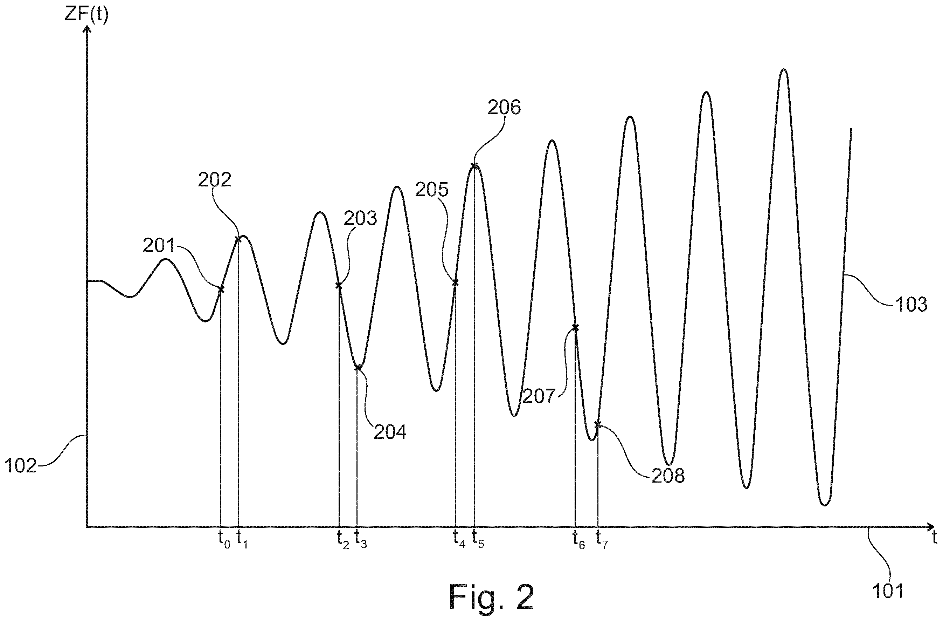

Fig. 2 zeigt die schematische Darstellung einer anderen Abtastung eines Empfangssignals, bei der das Nyquist-Shannonsche Abtasttheorem verletzt worden ist. In diesem Zusammenhang kann man auch davon sprechen, dass das Empfangssignal unterabgetastet ist. Die Abtastfrequenz ist jedoch so gewählt, dass kein Informationsgehalt im Signal verloren geht.

Wie aus Fig. 2 zu erkennen ist, erfolgt die Abtastung zu verschiedenen Zeiten, wobei zwischen den Abtastwerten zu den Zeitpunkten t0 201 und t1 202, t2 203 und t3 204, t4 205 und t5 206 bzw. t6 207 und t7 208 ein geringerer Zeitraum liegt als zwischen den Werten zu den Zeitpunkten t1 und t2, t3 und t4 bzw. t5 und t6.

Man kann in diesem Zusammenhang auch von einer paarweisen Abtastung sprechen, wobei die Abtastwerte zu den Zeitpunkten t0, t2, t4 und t6 einer ersten Gruppe von Abtastwerten zugeordnet werden können und die Werte zu den Zeitpunkten t1, t3, t5 und t7 einer zweiten Gruppe.

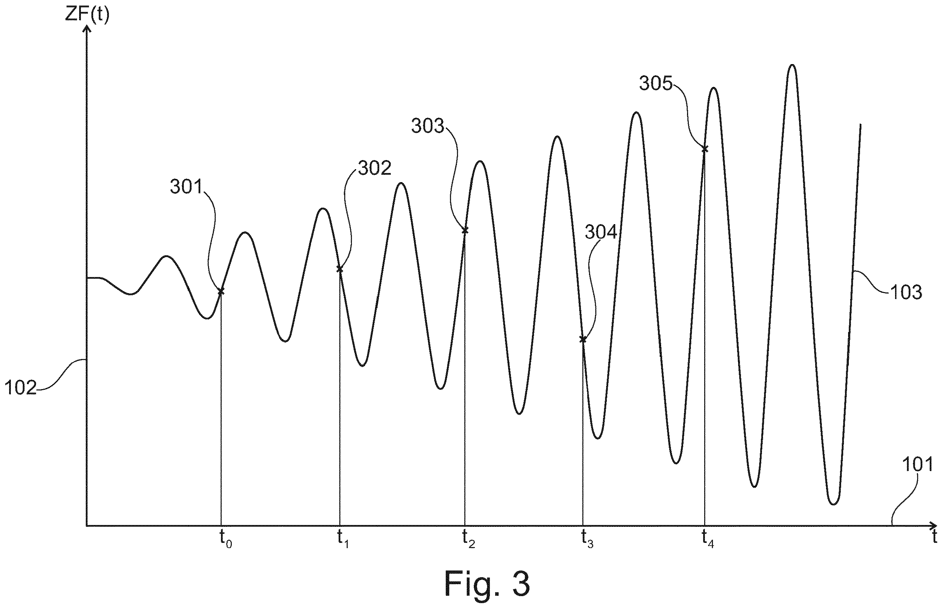

Fig. 3 zeigt die schematische Darstellung einer weiteren Abtastung eines Empfangssignals, beispielsweise eines ZF-Signals. Das Signal wird zu den Zeitpunkten t0, t1, t2, t3 und t4 (und ggf. zu weiteren Zeitpunkten) abgetastet. Die Momentanwerte des Empfangssignals zu diesen Zeitpunkten sind durch die Kreuze 301 bis 305 auf der Kurve des Empfangssignals 103 dargestellt. Auch ist die Frequenz der Unterabtastung der Signalcharakteristik angepasst, so dass kein Informationsgehalt verloren geht.

Bei Bandpasssignalen kann unter bestimmten Bedingungen eine Abtastfrequenz ausreichen, die unterhalb der nach dem Nyquist-Shannonschen-Abtasttheorem vorgesehenen Grenze des Doppelten der Frequenz der höchstfrequenten Komponente liegt. Trotz dieser als Unterabtastung bezeichneten Vorgehensweise können folgenschwere Alias-Effekte vermieden werden. Hierzu sei auf DE 10 2006 006 572 A1 verwiesen.

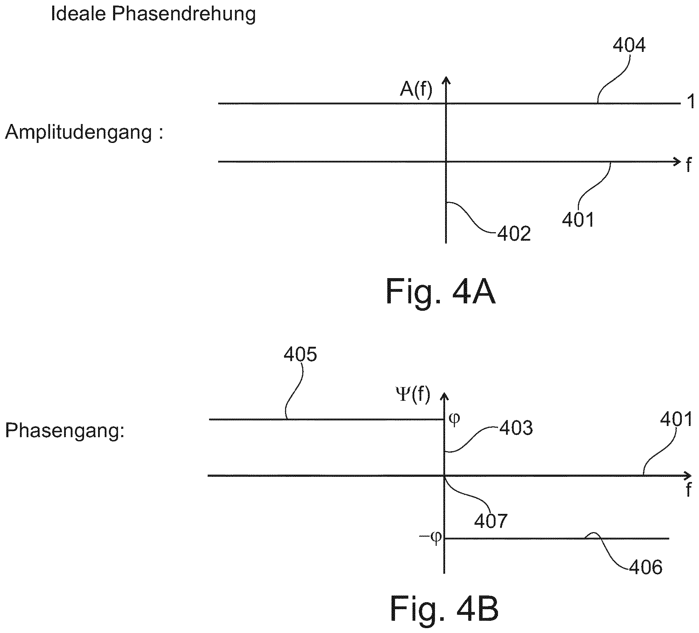

Fig. 4A zeigt den Amplitudengang, Amplitudenverlauf bzw. Betrag des Frequenzgangs A(f) 404 eines sog. Phasendrehers für einen idealisierten Fall. Die horizontale Achse 401 stellt die Frequenz dar und die vertikale Achse 402 die Amplitude. Der Amplitudengang weist über die gesamte Frequenzachse einen konstanten Wert 404 auf.

Fig. 4B zeigt den Phasengang $\psi(f)$ des Phasendrehers für diesen idealisierten Fall. Auch hier stellt die horizontale Achse 401 die Frequenz dar, wohingegen die vertikale Achse 403 die Phasendrehung darstellt. Für Frequenzen kleiner 0 wird das Signal um den Winkel $+ \varphi$ gedreht und für Frequenzwerte größer 0 um den Winkel $- \varphi$ (siehe Kurvenabschnitte 405, 406). Für f = 0 ist der Winkel 0 (siehe Bezugszeichen 407 im Koordinatenursprung).

Der Phasendreher dreht die Phase, Phasenlage bzw. den Phasenwinkel in Bezug auf seine Eingangsdaten. Bei den Eingangsdaten handelt es sich um die gewandelten Werte des Empfangssignals. Aus mindestens einem ersten Abtastwert wird ein weiterer Wert berechnet, bei dem die Phase des zugrunde liegenden ZF-Signals um den vorgegebenen Winkel $\varphi$ zum ersten Abtastwert abweicht. Der berechnete Wert ist wie der abgetastete Wert ein abstrakter Zahlenwert. Beide Werte unterscheiden sich im Regelfall in ihrem Betrag abhängig vom Drehwinkel $\varphi$. Die Abweichung des Betrags wiederum ergibt sich aus dem zugrundeliegenden ZF-Signal und dem Drehwinkel. Als Beispiel sei ein ZF-Signal im Maximum einer Periode abgetastet worden. Der abgetastete Wert sei A. In Abhängigkeit zum Drehwinkel $\varphi$ ändert sich nun der Zahlenwert A des abgetasteten Wertes. Bei einem Winkel von 90° berechnet sich der neue zweite Wert zu 0, bei einem Winkel von 180° berechnet er sich zu -A, bei 270° wieder zu 0 und bei 360° zu A.

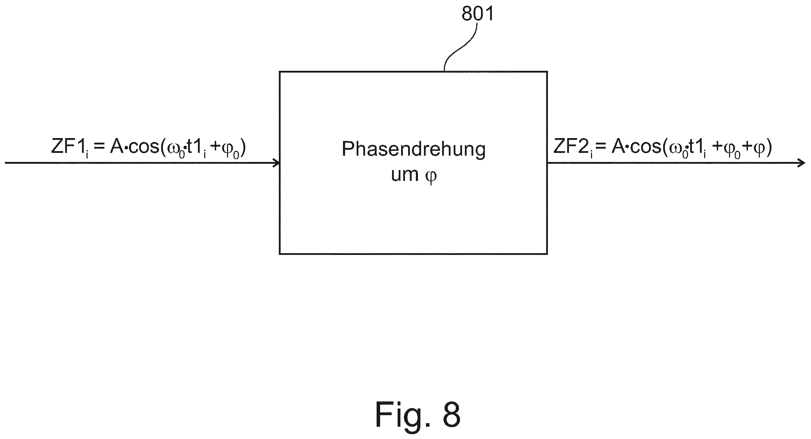

Fig. 8 soll eine sogenannte Drehung der Phase eines Signals oder Empfangssignals näher verdeutlichen. Das aufgeführte kontinuierliche Empfangssignal wird in Fig. 8 durch eine einzelne harmonische Schwingung beschrieben. Das Empfangssignal mag sich jedoch auch aus mehreren Schwingungen zusammensetzen. Es ist selbstverständlich, dass dann in diesem Fall die Phase jeder Komponente des Signals gedreht bzw. verschoben wird. Die einzelnen Bezeichnungen bzw. Variablen in der Figur seien wie folgt näher beschrieben:

    i: Laufvariable, i = 0,1,2,...
    $ZF1_i$ : digitaler Abtastwert aus der Gruppe von digitalen Abtastwerten
    $ZF2_i$: durch Drehung der Phase berechneter neuer Abtastwert
    $\varphi$: vorgegebener Phasendrehwinkel (Phasenwert)
    $t1_i$ : Zeitpunkt der Abtastung von $ZF1_i$
    A: Amplitude des kontinuierlichen Empfangssignals
    $\omega_0$ : Kreisfrequenz des Empfangssignals
    $\varphi_0$: Nullphasenwinkel des Empfangssignals

Es wird aus Fig. 8 ersichtlich, dass der Funktionsblock 801 aus dem digitalen Abtastwert $ZF1_i$ einen neuen Wert $ZF2_i$ generiert, dessen Betrag mit der zugrundeliegenden harmonischen Schwingung des ZF-Signals korrespondiert. Mit anderen Worten kann die Drehung der Phase um den Winkel $\varphi$ als Verschiebung um den Winkel $\varphi$ der harmonischen Schwingung, welche dem abgetasteten Empfangssignal zugrunde liegt, verstanden werden. Wie bereits oben beschrieben, kann anstelle eines ZF-Signals auch das nicht-zeitgedehnte Empfangssignal verwendet werden.

Neben der Bezeichnung Phasendreher kann auch die Bezeichnung Phasenschieber verwendet werden.

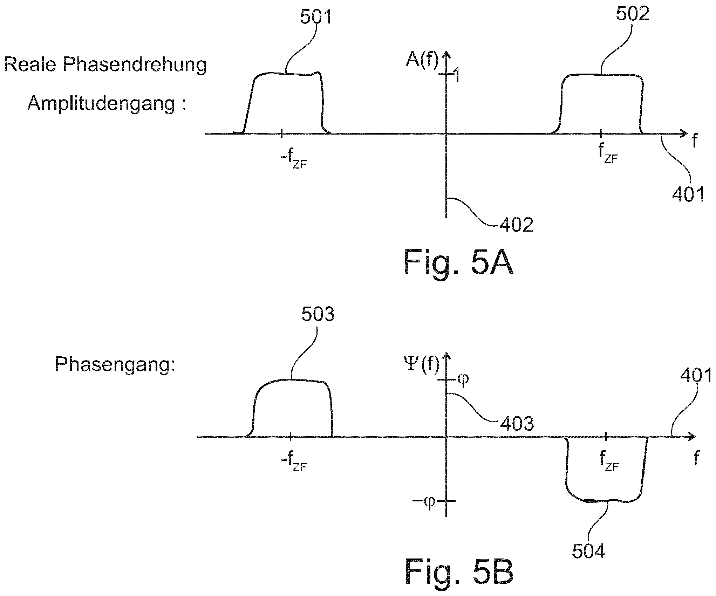

Die Realisierung des Phasendrehers kann auf unterschiedliche Art und Weise erfolgen und ist durch eine Approximation technisch realisierbar. Eine geeignete Approximation, die im dargestellten Fall für ein Bandpasssignal ausgeführt ist, ist in den Fig. 5A und 5B dargestellt.

Fig. 5A zeigt hierbei den Amplitudengang eines realen Phasendrehers und Fig. 5B den Phasengang eines realen Phasendrehers.

Wie aus den Fig. 5A und 5B ersichtlich, sind Amplituden- und Phasengang nur im Umgebungsbereich der Frequenzen - $f_{ZF}$ und + $f_{ZF}$ relevant.(siehe Bezugszeichen 501, 502 in Fig. 5A, 503 und 504 in Fig. 5B). In den übrigen Bereichen ist daher der Amplituden und Phasengang beispielhaft als nahezu 0 eingezeichnet (Der Amplituden und Phasengang darf auch andere Werte annehmen). Das Filter sollte natürlich entsprechend der Bandbreite und Trägerfrequenz des ZF-Signals realisiert werden. So erweist es sich als geschickt, wenn $f_{ZF}$ der Mittenfrequenz des ZF-Signals entspricht und die Bandbreite des Filters auf die Bandbreite des Signals abgestimmt ist.

Der Phasendreher kann beispielsweise durch ein geeignetes digitales Filter (FIR oder IIR-Struktur) realisiert werden. Die Filterung erfolgt hier im Zeitbereich.

FIR steht für Finite Impulse Response. Bei dieser Struktur handelt es sich um ein digitales Filter aus der digitalen Signalverarbeitung mit endlicher Impulsantwort. IIR steht für Infinite Impulse Response. Bei dieser Struktur handelt es sich um eine Klasse spezieller Filter aus der digitalen Signalverarbeitung mit unendlicher Impulsantwort.

Auch kann der ideale Phasendreher über die Fourier-Transformation approximiert werden. Das im Zeitbereich abgetastete Empfangssignal wird Fourier-transformiert und anschließend erfolgt die digitale Filterung im Frequenzbereich.

$$\Psi(f) = \begin{cases} -\varphi & , f > 0 \\ 0 & , f = 0 \\ \varphi & , f < 0 \end{cases}$$

Das Filter operiert auf dem Fourier-transformierten Eingangssignal mittels Phasendrehung, wobei die Anteile bei positiven Frequenzen um - $\varphi$ und die bei negativen Frequenzen um + $\varphi$ gedreht werden. Durch die inverse Fourier-Transformation erhält man das phasenverschobene Signal im Zeitbereich.

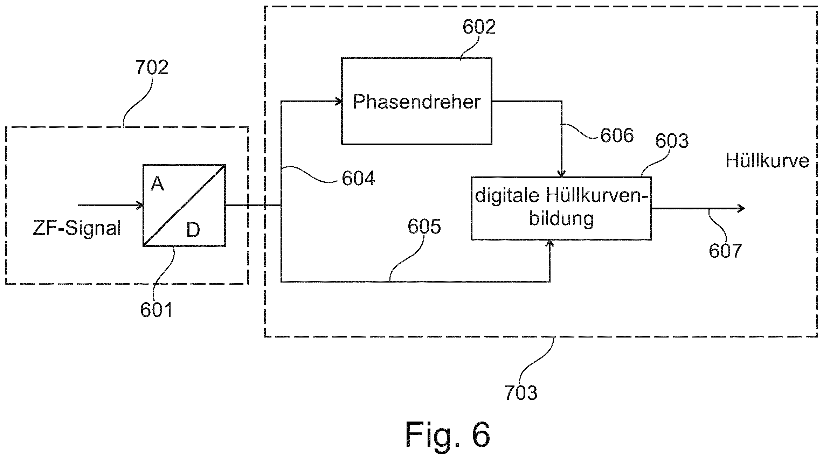

Fig. 6 zeigt ein Blockschaltbild eines Verfahrens gemäß einem Ausführungsbeispiel der Erfindung. Das Empfangssignal (beispielsweise ein ZF-Signal) wird abgetastet und die abgetasteten Werte werden einem Analog/Digital-Wandler 601 zugeführt. Dies erfolgt in der Abtastvorrichtung 702. Die gewandelten digitalen Werte werden im Schritt 604 dem Phasendreher 602 zugeführt. Hier erfolgt die Phasendrehung bzw. Drehung der Phase nach einem der in Bezugnahme auf die Fig. 5A und 5B beschriebenen Verfahren. Sowohl die originalen gewandelten Abtastwerte (Schritt 605) als auch die Werte, die durch den Phasendreher 602 berechnet wurden (Schritt 606), werden dem Funktionsblock "digitale Hüllkurvenbildung" 603 übermittelt. Phasendreher und Funktionsblock "digitale Hüllkurvenbildung" befinden sich in der digitalen Signalverarbeitungsvorrichtung 703.

Unter Verwendung der Formel

$$HK_i = \sqrt{ZF1_i^2 + \frac{(ZF2_i - ZF1_i \cdot cos(\varphi_i))^2}{sin^2(\varphi_i)}}$$

wobei:

i: Laufvariable, i = 0,1,2,...

$HK_i$: Hüllkurvenwert

$ZF1_i$ : digitaler Abtastwert aus der Gruppe von digitalen Abtastwerten

$ZF2_i$: durch Drehung der Phase berechneter neuer Abtastwert

$\varphi_i$: vorgegebener Phasendrehwinkel (Phasenwert)

können die einzelnen Hüllkurvenwerte berechnet werden, woraus sich die Hüllkurve ergibt (siehe Bezugszeichen 607).

$\varphi_i$ entspricht dem Phasendrehwinkel (Phasenwert) zwischen dem gewandelten ZF-Signal (erste Gruppe an Abtastwerten (ZF1)) und dem berechneten phasenverschobenen ZF-Signal (zweite Gruppe an Abtastwerten (ZF2)). Bei der Berechnung des Abtastwertes können beispielsweise eine Vielzahl an digitalen Abtastwerten der ersten Gruppe ZF1 (z.B. alle) verwendet werden.

$\varphi_i$ ist bei einer technischen Realisierung vorzugeben. Mit der Kenntnis der Phasenwerte $\varphi_i$, den gewandelten Abtastwerten $ZF1_i$ und den berechneten Werten $ZF2_i$ kann mit obiger Formel die Hüllkurve bzw. deren Stützstellen berechnet werden.

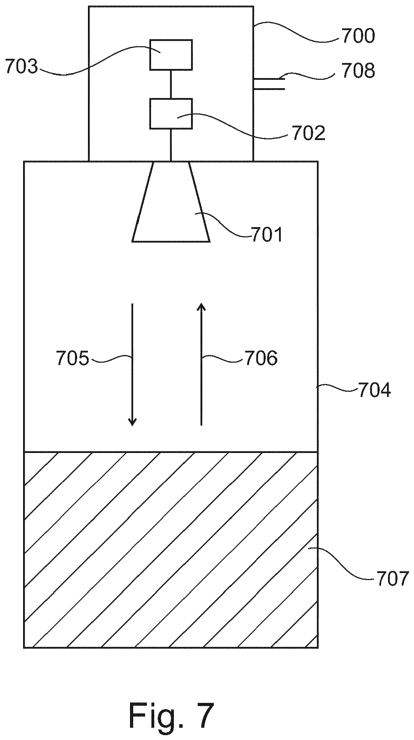

Fig. 7 zeigt einen Füllstandsensor 700, der an einem Behälter 704 angebracht ist und zur Bestimmung des Füllstands des Füllmediums 707 in dem Behälter dient. Der Sensor 700 ist als Puls-Laufzeit-Füllstandsensor ausgeführt und weist eine Sende-/Empfangsantenne 701 auf, welche ein Sendesignal 705 zur Füllgutoberfläche aussendet. Das an der Oberfläche reflektierte Signal 706 wird von der Sende-/Empfangseinheit 701 empfangen und das Empfangssignal wird dann an die Abtastvorrichtung 702 übergeben. Vor dem Abtasten wird es ggf. zeitgedehnt, so dass ein sog. ZF-Signal entsteht. Das (ggf. zeitgedehnte) Empfangssignal wird abgetastet und die abgetasteten Werte werden in digitale Abtastwerte gewandelt. Die digitalisierten Abtastwerte werden dann der digitalen Signalverarbeitungsvorrichtung 703 übergeben, in welcher die Berechnung der Hüllkurvenwerte (wie oben beschrieben) erfolgt.

Der Sensor 700 ist beispielsweise über die Zweileiterschleife 708 an die Außenwelt angeschlossen. Über die Zweileiterschleife 708 erfolgt sowohl die Energieversorgung als auch der Datenaustausch.

Das erfindungsgemäße Verfahren ermöglicht es, die Hüllkurve mit weniger Abtastwerten zu berechnen als in vergleichbaren Verfahren. Die Abtastrate der A/D-Wandler kann reduziert werden. Der Energieverbrauch durch die A/D-Wandlung sinkt und es ist möglich, A/D-Wandler mit geringerer technischer Anforderung einzusetzen.

Durch die Berechnung der Werte der einen Gruppe aus den Werten der anderen Gruppe wird die in bekannten Verfahren notwendige iterative Berechnung zur exakteren Bildung der Hüllkurve hinfällig, da sich zwischen den abgetasteten Werten der einen Gruppe und den berechneten Werten der anderen Gruppe die Amplitude der Hüllkurve nicht verändert.

Die Abtastung kann (muss aber nicht) zu äquidistanten Zeitpunkten erfolgen. Dies führt zu einer leichteren Realisierung der Ansteuerung des A/D-Wandlers.

Im Vergleich zu bekannten Puls-Laufzeit-Füllstandsensoren ist nur ein A/D-Wandler erforderlich, man kann also einen der zwei verwendeten A/D-Wandler einsparen.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

**Patentansprüche**

1. Verfahren zur Berechnung einer Hüllkurvenamplitude bei einer Füllstandmessung durch einen Füllstandsensor, wobei das Verfahren die folgenden Schritte aufweist:

Bilden eines bandpassgefilterten Zwischenfrequenzsignals aus einem Empfangssignal des Füllstandsensors;

Abtasten zumindest eines Bereichs des Zwischenfrequenzsignals zu diskreten Zeitpunkten;

Wandeln der Abtastwerte des abgetasteten Zwischenfrequenzsignals in digitale Abtastwerte;

Berechnen eines neuen Wertes für einen ersten digitalen Abtastwert der digitalen Abtastwerte durch Drehung der Phase des Abtastwertes des abgetasteten Bereichs des Zwischenfrequenzsignals um einen vorgegebenen Winkel;
Berechnen der Hüllkurvenamplitude aus dem ersten digitalen Abtastwert und dem durch die Drehung der Phase berechneten neuen Wert.

2. Verfahren nach Anspruch 1,
wobei eine Hüllkurve aus einer Vielzahl von Hüllkurvenamplituden gebildet ist.

3. Verfahren nach Anspruch 1, wobei die Berechnung des Hüllkurvenwertes nach

$$HK_i = \sqrt{ZF1_i{}^2 + \frac{(ZF2_i - ZF1_i \cdot \cos(\varphi_i))^2}{\sin^2(\varphi_i)}}$$

erfolgt, wobei:

    i : Laufvariable, i = 0, 1, 2, ...
    $HK_i$ : Hüllkurvenwert
    $ZF1_i$ : digitaler Abtastwert aus der Gruppe von digitalen Abtastwerten
    $ZF2_i$ : durch Drehung der Phase berechneter neuer Abtastwert
    $\varphi_i$ : vorgegebener Phasendrehwinkel (Phasenwert).

4. Verfahren nach einem der vorhergehenden Ansprüche, wobei der vorgegebene Winkel einen Wert ungleich 90° aufweist.

5. Verfahren nach einem der vorhergehenden Ansprüche, wobei die Phasendrehung durch ein digitales Filter im Zeitbereich erfolgt.

6. Verfahren nach Anspruch 5, wobei das Filter eine FIR oder IIR-Filterstruktur aufweist.

7. Verfahren nach einem der Ansprüche 1 bis 4, wobei die Phasendrehung durch ein digitales Filter im Frequenzbereich erfolgt.

8. Verfahren nach Anspruch 7, wobei das digitale Filter eine Fourier-Transformation vornimmt.

9. Verfahren nach einem der Ansprüche 1 bis 3, wobei die Phasendrehung durch ein Hilbert-Filter erfolgt und somit der der vorgegebene Winkel einen Wert gleich 90° aufweist.

10. Verfahren nach einem der vorhergehenden Ansprüche, wobei vor der Berechnung der Hüllkurve eine kohärente Scharmittelung durchgeführt wird.

11. Verfahren nach einem der vorhergehenden Ansprüche, wobei eine Vielzahl von Hüllkurvenwerten berechnet wird, aus welcher die Hüllkurve bestimmt wird.

12. Füllstandsensor (700) zum Berechnen einer Hüllkurvenamplitude einer Hüllkurve und zum Bestimmen eines Füllstands, der Füllstandsensor aufweisend:

    eine Abtastvorrichtung (702) zum Bilden eines bandpassgefilterten Zwischenfrequenzsignals aus einem Empfangssignal des Füllstandsensors und zum Abtasten zumindest eines Bereichs eines Zwischenfrequenzsignals zu diskreten Zeitpunkten und zum Wandeln der Abtastwerte des abgetasteten Empfangssignals in digitale Abtastwerte;
    eine digitale Signalverarbeitungsvorrichtung (703) zum:

        Berechnen eines neuen Wertes für einen ersten digitalen Abtastwert der digitalen Abtastwerte durch Drehung der Phase des Abtastwertes des abgetasteten Bereichs des Zwischenfrequenzsignals um einen vorgegebenen Winkel;
        Berechnen einer Hüllkurvenamplitude aus dem ersten digitalen Abtastwert und dem durch die Drehung der Phase berechneten neuen Wert.

**13.** Abtast- und Signalverarbeitungsanordnung (702, 703) mit einer Abtastvorrichtung (702) und einem Prozessor (703) zum Berechnen eines Hüllkurvenwerts eines analogen Signals, ausgeführt zum Durchführen der Schritte nach einem der Ansprüche 1 bis 11.

**14.** Programmelement, das, wenn es auf einer Abtast- und Signalverarbeitungsanordnung (702, 703) ausgeführt ist, die Anordnung anleitet, die Schritte nach einem der Ansprüche 1 bis 11 durchzuführen.

**15.** Computerlesbares Medium, auf dem ein Programmelement nach Anspruch 14 gespeichert ist.

**Claims**

**1.** A method of calculating an envelope amplitude in a fill level measurement by a level sensor, the method comprising the steps of:

forming a bandpass-filtered intermediate frequency signal from a received signal of the level sensor;
sampling at least a portion of the intermediate frequency signal at discrete points in time;
converting the samples of the sampled intermediate frequency signal to digital samples;
calculating a new value for a first digital sample of the digital samples by rotating the phase of the sample of the sampled portion of the intermediate frequency signal by a predetermined angle;
calculating the envelope amplitude from the first digital sample and the new value calculated by rotating the phase.

**2.** The method according to claim 1,
wherein an envelope is formed from a plurality of the envelope amplitudes.

**3.** The method according to claim 1, wherein calculating the envelope amplitude is performed according to

$$HK_i = \sqrt{ZF1_i^2 + \frac{(ZF2^i - ZF1^i \cdot \cos(\varphi^i))^2}{\sin^2(\varphi^i)}}$$

with:

$i$ : control variable, $i = 0, 1, 2, \ldots$
$HK_i$ : envelope value
$ZF1_i$ : digital sample of the group of digital samples
$ZF2_i$ : new value calculated by rotating the phase of the sample
$\varphi_i$ : predefined phase rotation angle (phase value).

**4.** The method according to any one of the preceding claims, wherein the predetermined angle has a value other than 90°.

**5.** The method according to any one of the preceding claims, wherein the phase rotation is performed by a digital filter in the time domain.

**6.** The method according to claim 5, wherein the filter comprises an FIR or IIR filter structure.

**7.** The method according to any one of claims 1 to 4, wherein the phase rotation is by a digital filter in the frequency domain.

**8.** The method according to claim 7, wherein the digital filter performs a Fourier transform.

**9.** The method according to any one of claims 1 to 3, wherein the phase rotation is performed by a Hilbert filter and thus the predetermined angle has a value equal to 90°.

**10.** The method according to any one of the preceding claims, wherein a coherent coulter averaging is performed before calculating the envelope.

11. The method according to any one of the preceding claims, wherein a plurality of envelope values is calculated from which the envelope is determined.

12. A level sensor (700) for calculating an envelope amplitude of an envelope and determining a fill level, the level sensor comprising:

a sampling device (702) for forming a bandpass-filtered intermediate frequency signal from a received signal of the level sensor and for sampling at least a portion of an intermediate frequency signal at discrete times and for converting the samples of the sampled received signal into digital samples;
a digital signal processing device (703) for:

calculating a new value for a first digital sample of the digital samples by rotating the phase of the sample of the sampled portion of the intermediate frequency signal by a predetermined angle;
calculating an envelope amplitude from the first digital sample and the new value calculated by rotating the phase.

13. A sampling and signal processing arrangement (702, 703) comprising a sampling device (702) and a processor (703) for calculating an envelope value of an analogue signal, adapted to perform the steps of any one of claims 1 to 11.

14. A program element which, when executed on a sampling and signal processing device (702, 703), instructs the device to perform the steps according to any one of claims 1 to 11.

15. A computer-readable medium on which is stored a program element according to claim 14.

**Revendications**

1. Procédé de calcul d'une amplitude d'enveloppe lors d'une mesure de niveau de remplissage par un capteur de niveau de remplissage, le procédé présentant les étapes consistant à :

former un signal de fréquence intermédiaire filtré passe-bande à partir d'un signal de réception du capteur de niveau de remplissage ;
échantillonner au moins une partie du signal de fréquence intermédiaire à des instants discrets ;
convertir les valeurs d'échantillonnage du signal de fréquence intermédiaire échantillonné en valeurs d'échantillonnage numériques ;
calculer une nouvelle valeur pour une première valeur d'échantillonnage numérique des valeurs d'échantillonnage numériques par rotation d'un angle prédéfini de la phase de la valeur d'échantillonnage de la partie échantillonnée du signal de fréquence intermédiaire ;
calculer l'amplitude d'enveloppe à partir de la première valeur d'échantillonnage numérique et de la nouvelle valeur calculée par la rotation de la phase.

2. Procédé selon la revendication 1, dans lequel une enveloppe est formée à partir d'une pluralité d'amplitudes d'enveloppe.

3. Procédé selon la revendication 1, dans lequel la valeur d'enveloppe est calculée selon :

$$HK_i = \sqrt{ZF1_i{}^2 + \frac{(ZF2_i - ZF1_i \cdot \cos(\varphi_i))^2}{\sin^2(\varphi_i)}}$$

où :

$i$ : variable courante, $i = 0, 1, 2, ...$
$HK_i$ : valeur d'enveloppe
$ZF1_i$ : valeur d'échantillonnage numérique du groupe de valeurs d'échantillonnage numériques

ZF2$_i$ : nouvelle valeur d'échantillonnage calculée par rotation de la phase

$\varphi_i$ : angle de rotation de phase prédéfini (valeur de phase).

4. Procédé selon l'une des revendications précédentes, dans lequel l'angle prédéfini présente une valeur différente de 90°.

5. Procédé selon l'une des revendications précédentes, dans lequel la rotation de phase est effectuée par un filtre numérique dans le domaine temporel.

6. Procédé selon la revendication 5, dans lequel le filtre présente une structure de filtre FIR ou IIR.

7. Procédé selon l'une des revendications 1 à 4, dans lequel la rotation de phase est effectuée par un filtre numérique dans le domaine fréquentiel.

8. Procédé selon la revendication 7, dans lequel le filtre numérique effectue une transformation de Fourier.

9. Procédé selon l'une des revendications 1 à 3, dans lequel la rotation de phase est effectuée par un filtre de Hilbert, l'angle prédéfini présentant ainsi une valeur égale à 90°.

10. Procédé selon l'une des revendications précédentes, dans lequel on effectue un calcul de moyenne d'ensemble cohérente avant de calculer l'enveloppe.

11. Procédé selon l'une des revendications précédentes, dans lequel on calcule une pluralité de valeurs d'enveloppe à partir desquelles on détermine l'enveloppe.

12. Capteur de niveau de remplissage (700) pour calculer une amplitude d'enveloppe d'une enveloppe et pour déterminer un niveau de remplissage, le capteur de niveau de remplissage présentant :

un dispositif d'échantillonnage (702) pour former un signal de fréquence intermédiaire filtré passe-bande à partir d'un signal de réception du capteur de niveau de remplissage et pour échantillonner au moins une partie d'un signal de fréquence intermédiaire à des instants discrets et convertir les valeurs d'échantillonnage du signal de réception échantillonné en valeurs d'échantillonnage numériques ;
un dispositif de traitement de signal numérique (703) pour :

calculer une nouvelle valeur pour une première valeur d'échantillonnage numérique des valeurs d'échantillonnage numériques par rotation d'un angle prédéfini de la phase de la valeur d'échantillonnage de la partie échantillonnée du signal de fréquence intermédiaire ;
calculer une amplitude d'enveloppe à partir de la première valeur d'échantillonnage numérique et de la nouvelle valeur calculée par la rotation de la phase.

13. Agencement d'échantillonnage et de traitement de signal (702, 703) comprenant un dispositif d'échantillonnage (702) et un processeur (703) pour calculer une valeur d'enveloppe d'un signal analogique, exécuté pour mettre en œuvre les étapes selon l'une des revendications 1 à 11.

14. Élément de programme qui, lorsqu'il est exécuté sur un agencement d'échantillonnage et de traitement de signal (702, 703), amène l'agencement à mettre en œuvre les étapes selon l'une des revendications 1 à 11.

15. Support lisible par ordinateur sur lequel est stocké un élément de programme selon la revendication 14.

Fig. 1

Fig. 2

EP 2 620 754 B1

Fig. 3

EP 2 620 754 B1

Ideale Phasendrehung

Amplitudengang :

## Fig. 4A

Phasengang:

## Fig. 4B

EP 2 620 754 B1

Reale Phasendrehung

Amplitudengang :

Fig. 5A

Phasengang:

Fig. 5B

Fig. 6

Fig. 7

$$ZF1_i = A \cdot \cos(\omega_0 \cdot t1_i + \varphi_0)$$

**801**

Phasendrehung
um $\varphi$

$$ZF2_i = A \cdot \cos(\omega_0 \cdot t1_i + \varphi_0 + \varphi)$$

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006572 A1
- EP 2226615 A1